# EUROPEAN PATENT APPLICATION

(11) **EP 4 184 983 A1**
(43) Date of publication of application: **24.05.2023**
(21) Application number: 20945107.9
(22) Date of filing: 17.07.2020
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2020/027927
(87) International publication number: WO 2022/014054

(57) **Abstract**

A terminal according to one aspect of the present disclosure includes a control section that determines, based on a higher layer signaling, whether to apply different spatial relations or the same spatial relation for repetitive transmissions of a Physical Uplink Control Channel (PUCCH), and a transmitting section that performs the repetitive transmissions using one or more determined spatial relations. According to one aspect of the present disclosure, it is possible to achieve preferable repetitive PUCCH transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)", "5G+ (plus)", "6th generation mobile communication system (6G)", "New Radio (NR)", "3GPP Rel. 15 (or later versions)", and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In Rel-15 NR, spatial relation information (which may be referred to as SRI) related to a Physical Uplink Control Channel (PUCCH) may be configured for a user terminal (User Equipment (UE)). At a certain time, in Rel-15 NR it is controlled that one piece of PUCCH SRI is active for one PUCCH resource.

For NR, the UE that repetitively transmits a PUCCH toward a plurality of transmission/reception points in order to improve reliability of the PUCCH is under study. Repetitive transmission of the PUCCH may be referred to as PUCCH repetition.

However, according to NR specifications thus far, it is not possible to apply different SRI in the PUCCH repetition, and to effectively improve reception quality of the PUCCH. For example, this case fails to preferably achieve spatial diversity gain, high rank transmission, and the like in a case where a plurality of transmission/reception points are used, and an increase in communication throughput may be suppressed.

Thus, an object of the present disclosure is to provide a terminal, a radio communication method, and a base station that can achieve preferable repetitive PUCCH transmission.

### Solution to Problem

A terminal according to one aspect of the present disclosure includes a control section that determines, based on a higher layer signaling, whether to apply different spatial relations or the same spatial relation for repetitive transmissions of a Physical Uplink Control Channel (PUCCH), and a transmitting section that performs the repetitive transmissions using one or more determined spatial relations.

### Advantageous Effects of Invention

According to one aspect of the present disclosure, it is possible to achieve preferable repetitive PUCCH transmission.

### Brief Description of Drawings

FIGS. 1A to 1C are each a diagram to show an example of an RRC parameter for MTRP repetition in embodiment 1.1;
FIGS. 2A to 2C are each a diagram to show an example of an RRC parameter for MTRP repetition in embodiment 1.2;
FIGS. 3A and 3B are each a diagram to show an example of an RRC parameter for MTRP repetition in embodiment 2.1;
FIGS. 4A and 4B are each a diagram to show an example of an RRC parameter for MTRP repetition in embodiment 2.2;
FIG. 5 is a diagram to show an example of a MAC CE for activation of a plurality of PUCCH spatial relations according to a fourth embodiment;
FIG. 6 is a diagram to show an example of a MAC CE for activation of a plurality of PUCCH spatial relations according to a fifth embodiment;
FIGS. 7A and 7B are each a diagram to show an example of correspondence between repetitive transmission occasions and spatial relations according to the fifth embodiment;
FIG. 8 is a diagram to show an example of a schematic structure of a radio communication system according to one embodiment;
FIG. 9 is a diagram to show an example of a structure of a base station according to one embodiment;
FIG. 10 is a diagram to show an example of a structure of a user terminal according to one embodiment; and
FIG. 11 is a diagram to show an example of a hardware structure of the base station and the user terminal according to one embodiment.

### Description of Embodiments

### (Spatial Relation Information)

In NR, a UE controls transmission processing (for example, at least one of transmission, mapping, precoding, modulation, and coding) of at least one of an uplink signal and an uplink channel (also represented as a signal/channel) based on a given spatial relation.

The spatial relation applied to a given signal/channel may be identified by spatial relation information (SRI) notified (configured) by using of higher layer signaling.

Note that in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

For example, in Rel-15 NR, spatial relation information ("PUCCH-SpatialRelationInfo" information element of RRC) between a given reference signal (RS) and an uplink control channel (Physical Uplink Control Channel (PUCCH)) may be included in PUCCH configuration information ("PUCCH-Config" information element of RRC) and configured for the UE.

The given RS may be at least one of a synchronization signal block (SSB), a channel state information reference signal (CSI-RS), and a reference signal for measurement (Sounding Reference Signal (SRS)).

The configured SRI may include an SRI Identifier (ID) for SRI identification. The SRI may also include at least one of an SSB index, a CSI-RS resource ID, and an SRS resource ID as an index of the above-described given RS. The spatial relation information may include a serving cell index, a bandwidth part (BWP) ID, and the like corresponding to the above-described given RS.

Note that in the present disclosure, an index, an ID, an indicator, a resource ID, and the like may be interchangeably interpreted.

When spatial relation information related to an SSB or CSI-RS and a PUCCH is configured for the UE, the UE may transmit the PUCCH by using a same spatial domain filter as a spatial domain filter for reception of the SSB or CSI-RS. In other words, in this case, the UE may assume that a UE receive beam for the SSB or CSI-RS and a UE transmit beam for the PUCCH are the same.

When spatial relation information related to an SRS and a PUCCH is configured for the UE, the UE may transmit the PUCCH by using a same spatial domain filter as a spatial domain filter for transmission of the SRS. In other words, in this case, the UE may assume that a UE transmit beam for the SRS and a UE transmit beam for the PUCCH are the same.

Note that a spatial domain filter for transmission by a base station, a downlink spatial domain transmission filter, and a transmit beam of the base station may be interchangeably interpreted. A spatial domain filter for reception by the base station, an uplink spatial domain receive filter, and a receive beam of the base station may be interchangeably interpreted.

A spatial domain filter for transmission by the UE, an uplink spatial domain transmission filter, and a transmit beam of the UE may be interchangeably interpreted. A spatial domain filter for reception by the UE, a downlink spatial domain receive filter, and a receive beam of the UE may be interchangeably interpreted.

The SRI may be configured for the UE in units of PUCCH configurations (PUCCH-Config). The SRI configured by a PUCCH configuration may be applied to all PUCCH resources configured by the PUCCH configuration.

When more than one piece of SRI related to the PUCCH is configured for the UE, the UE may perform, based on a PUCCH spatial relation activation/deactivation MAC CE, control so that one piece of PUCCH SRI is active for one PUCCH resource at a certain time.

### (Multi-TRP)

For NR, the UE that performs UL transmission (for example, PUCCH transmission) to one or a plurality of transmission/reception points (TRPs) (multiple TRPs) is under study.

As an example, repetitive transmission of a PUCCH to which different SRI are applied to the multiple TRPs is under study in order to improve reliability of the PUCCH for a use case (or service) with ultra-reliability and low latency (for example, Ultra Reliable and Low Latency Communications (URLLC)). Repetitive transmission of the PUCCH may be referred to as PUCCH repetition.

Note that the SRI may correspond to a beam. For example, the UE may assume that the PUCCH with the different SRI is transmitted by using different beams.

According to the repetitive transmission of the PUCCH, with respect to the PUCCH, improvement of reception quality on the network side can be expected. However, existing Rel-15/16 NR allows only application of the same spatial relation to repetitive PUCCH transmission.

Thus, according to NR specifications thus far, it is not possible to apply different SRI in the PUCCH repetition, and to effectively improve reception quality of the PUCCH. This case fails to preferably achieve spatial diversity gain, high rank transmission, and the like in a case where multiple TRPs are used, and an increase in communication throughput may be suppressed.

Thus, the inventors of the present invention came up with the idea of a method for achieving preferable repetitive PUCCH transmission. According to one aspect of the present disclosure, the UE can appropriately determine how to switch between PUCCH repetitions with different spatial relations and PUCCH repetitions with the same spatial relation.

Embodiments according to the present disclosure will be described in detail with reference to the drawings as follows. The radio communication methods according to respective embodiments may each be employed individually, or may be employed in combination.

Note that in the present disclosure, activation, deactivation, indication (or specification (indicate)), selection, configuration (configure), update, determination (determine), and the like may be interchangeably interpreted. In the present disclosure, a sequence, a list, a set, a group, and the like may be interchangeably interpreted.

Note that in the present disclosure, a panel, a beam, a panel group, a beam group, an Uplink (UL) transmission entity, a TRP, spatial relation information (SRI), a spatial relation, a control resource set (COntrol REsource SET (CORESET)), a Physical Downlink Shared Channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, or a CORESET group), a given resource (for example, a given reference signal resource), a given resource set (for example, a given reference signal resource set), a CORESET pool, a PUCCH group (PUCCH resource group), a TCI state (DL TCI state), a UL TCI state, and the like may be interchangeably interpreted.

A panel Identifier (ID) and a panel may be interchangeably interpreted. In other words, a TRP ID and a TRP, a CORESET group ID and a CORESET group, and the like may each be interchangeably interpreted. An ID and an index may be interchangeably interpreted.

In the present disclosure, simple description "spatial relation" and a spatial relation for a PUCCH may be interchangeably interpreted.

### (Radio Communication Method)

### <First Embodiment>

A first embodiment relates to MTRP repetition.

The MTRP repetition may be explicitly configured for a UE by higher layer signaling, as distinguished from conventional repetition (repetition in Rel. 15/16). For example, the MTRP repetition may be explicitly configured for the UE by an RRC parameter (for example, an information element) included in PUCCH configuration information (PUCCH-Config information element of RRC).

The first embodiment is broadly classified into a case (embodiment 1.1) where the number of MTRP repetitions is indicated by a new parameter (for example, an RRC parameter "nrofMTRPrep") and a case (embodiment 1.2) where the number of MTRP repetitions is indicated by an RRC parameter defined in existing NR (for example, an RRC parameter "nrofslot").

Note that the MTRP repetition, MTRP-based repetition, repetition in Rel. 17, repetitions to which different spatial relations are applied, and the like may be interchangeably interpreted. The repetition in Rel. 15/16, STRP-based repetition, repetition without MTRP, slot-based repetition, repetitions to which the same spatial relation is applied, and the like may be interchangeably interpreted. "nrofslot" may be referred to as a parameter indicating the number of repetitions to which the same spatial relation is applied.

### [Embodiment 1.1]

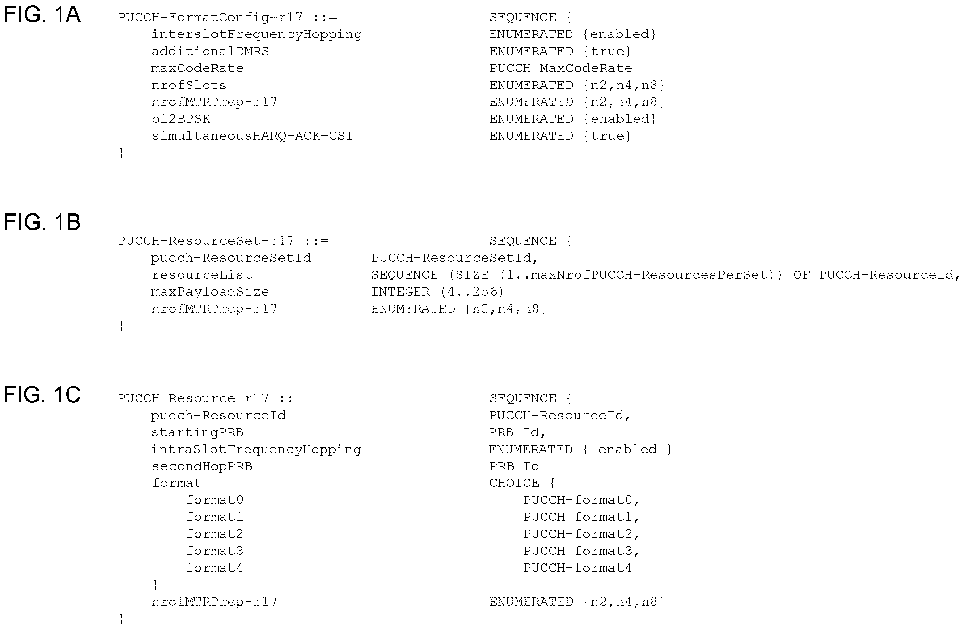

FIGS. 1A to 1C are each a diagram to show an example of the RRC parameter for MTRP repetition in embodiment 1.1. The present example is described with use of Abstract Syntax Notation One (ASN.1) notation (note that the present example is just an example, and thus is not necessarily ideal description).

FIG. 1A shows an example in which MTRP repetition is configured for each PUCCH format. PUCCH-FormatConfig-r17 that is an RRC information element (IE) including a configuration related to the PUCCH format may include nrofMTRPrep-r17 indicating the number of MTRP repetitions. Note that "-r17" in the present disclosure indicates being a parameter to be specified in 3GPP Rel. 17, but the name of the parameter is not limited to this (for example, the name may not include "-r17"), and 3GPP release with employment of the present disclosure is not limited to Rel. 17. Hereinafter, a parameter with "-r17" may sometimes be referred to as the name without "-r17".

In the present example, available values of nrofMTRPrep-r17 are n2, n4, and n8, and nX indicates that the number of repetitions is X, but an X value is not limited to this, and, for example, n1 (the number of repetitions is 1, in other words, no repetition) may be configurable. Note that the UE that performs repetitive PUCCH transmission by using nrofMTRPrep-r17 = nX may repetitively transmit the PUCCH across X slots, or may repetitively transmit the PUCCH across X resources (for example, duration of the PUCCH). Note that repetitive transmission of the present disclosure may be (continuous) repetitive transmission without a gap between repetitions, or may be (discontinuous) repetitive transmission with a gap between repetitions.

FIG. 1B shows an example in which MTRP repetition is configured for each PUCCH resource set. An RRC information element PUCCH-ResourceSet-r17 including a configuration related to the PUCCH resource set may include nrofMTRPrep-r17 indicating the number of MTRP repetitions. The number of MTRP repetitions is associated with the PUCCH resource set, thereby allowing, for example, the number of MTRP repetitions to be changed depending on a UCI size (the number of bits) transmitted on the PUCCH.

FIG. 1C shows an example in which MTRP repetition is configured for each PUCCH resource. An RRC information element PUCCH-Resource-r17 including a configuration related to the PUCCH resource may include nrofMTRPrep-r17 indicating the number of MTRP repetitions. The number of MTRP repetitions is associated with the PUCCH resource, thereby allowing, for example, the number of MTRP repetitions to be changed depending on a PUCCH resource indicator (PRI) field of DCI.

In a case where the RRC parameter for the MTRP repetition is configured and where the number of MTRP repetitions indicated by the parameter is greater than 1, and a plurality of spatial relations are configured/activated/indicated for the PUCCH resource used for transmission, the UE may perform the above-described number of repetitions of PUCCH transmission by using repetition in Rel. 17. In the repetition in Rel. 17, different spatial relations may be applied to respective repetitions.

In a case where the RRC parameter for the MTRP repetition is configured and where the number of MTRP repetitions indicated by the parameter is greater than 1, and only one spatial relation is configured/activated/indicated for the PUCCH resource used for transmission, the UE may perform the above-described number of repetitions of PUCCH transmission to which the same spatial relation (the above-described one spatial relation) is applied, or may be in accordance with an operation of Rel. 15/16.

Here, the operation of Rel. 15/16 may be an operation in which, when an RRC parameter "nrofslot" indicating the number of slot repetitions in Rel. 15/16 is configured, the UE repeats PUCCH transmission to which the same spatial relation is applied across slots with the above-described number of slot repetitions, otherwise the UE does not repeat the PUCCH transmission (performs the transmission once).

Note that the UE may not expect a case where the RRC parameter for the MTRP repetition is configured for the UE and where the number of MTRP repetitions indicated by the parameter is greater than 1, and only one spatial relation is configured/activated/indicated for the PUCCH resource used for transmission (may treat the case as an error case).

In a case where the RRC parameter for the MTRP repetition is configured and where the number of MTRP repetitions indicated by the parameter is 1, the UE may be in accordance with the above-mentioned operation of Rel. 15/16, or may not repeat PUCCH transmission regardless of whether the RRC parameter "nrofslot" indicating the number of slot repetitions in Rel. 15/16 is configured.

Note that the UE may not expect a case where the RRC parameter for the MTRP repetition is configured and where the number of MTRP repetitions indicated by the parameter is 1 (may treat the case as an error case).

The UE may be in accordance with the above-mentioned operation of Rel. 15/16 when the RRC parameter for the MTRP repetition is not configured.

### [Embodiment 1.2]

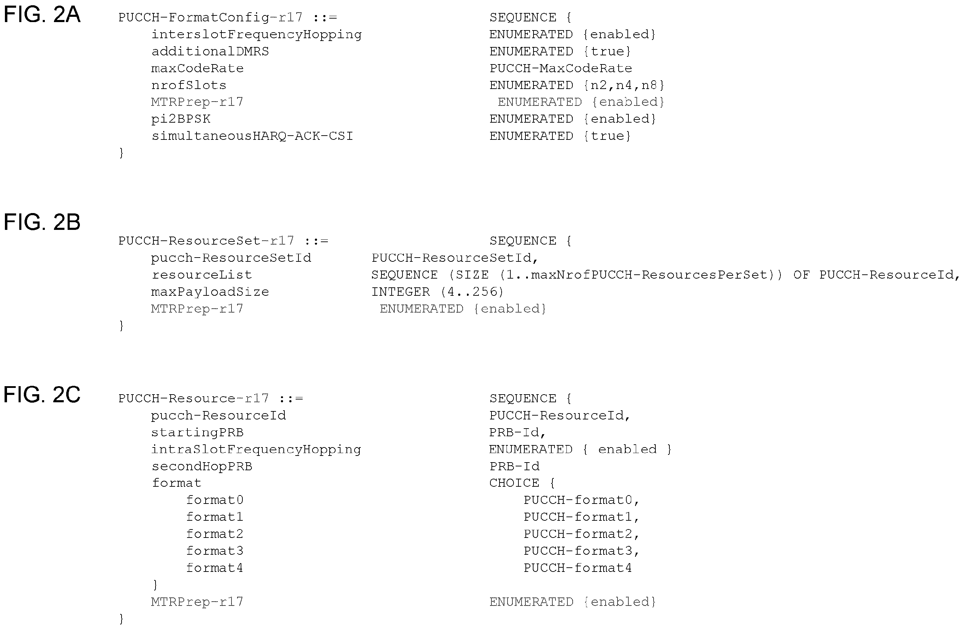

FIGS. 2A to 2C are each a diagram to show an example of the RRC parameter for MTRP repetition in embodiment 1.2. FIGS. 2A to 2C are similar to FIGS. 1A to 1C, respectively, but are different in that MTRPrep-r17 indicating that MTRP repetition is applied or not (or enabled/disabled) is included in place of nrofMTRPrep-r17 indicating the number of MTRP repetitions.

In the present example, an available value of MTRPrep-r17 is only "enabled (valid)" and it is assumed that a value of MTRPrep-r17 is "disabled (invalid)" when MTRPrep-r17 is not configured, but is not limited to this. The available value of MTRPrep-r17 may be "enabled" or "disabled", or the available value may be only "disabled" and it may be assumed that the value is "enabled" when MTRPrep-r17 is not configured.

In a case where the RRC parameter "nrofslot" indicating the number of slot repetitions in Rel. 15/16 is configured and where the number of repetitions indicated by the parameter is greater than 1, MTRP repetition is configured as "enabled" (for example, MTRPrep-r17 = "enabled"), and a plurality of spatial relations are configured/activated/indicated for a PUCCH resource used for transmission, the UE may perform the above-described number of repetitions of PUCCH transmission by using repetition in Rel. 17. In the repetition in Rel. 17, different spatial relations may be applied to respective repetitions.

In a case where the RRC parameter "nrofslot" is configured and where the number of repetitions indicated by the parameter is greater than 1, MTRP repetition is configured as "enabled" (for example, MTRPrep-r17 = "enabled"), and only one spatial relation is configured/activated/indicated for the PUCCH resource used for transmission, the UE may perform the above-described number of repetitions of PUCCH transmission to which the same spatial relation (the above-described one spatial relation) is applied.

Note that the UE may not expect a case where the RRC parameter "nrofslot" is configured for the UE and where the number of repetitions indicated by the parameter is greater than 1, MTRP repetition is configured as "enabled" (for example, MTRPrep-r17 = "enabled"), and only one spatial relation is configured/activated/indicated for the PUCCH resource used for transmission (may treat the case as an error case).

In a case where the RRC parameter "nrofslot" is configured and where the number of repetitions indicated by the parameter is greater than 1, and MTRP repetition is not configured as "enabled", the UE may be in accordance with the above-mentioned operation of Rel. 15/16.

When the RRC parameter "nrofslot" is not configured, the UE may not repeat PUCCH transmission regardless of whether the MTRP repetition is enabled/disabled.

### [Switching Between MTRP Repetition and Repetition Without MTRP]

In the first embodiment, with respect to a semi-statically configured PUCCH resource (for example, a PUCCH resource for a periodic/semi-persistent CSI report), switching between MTRP repetition and repetition without MTRP may be performed with use of at least one of the following:
- reconfiguring nrofMTRPrep-r17 or MTRPrep-r17 for PUCCH resource;
- reconfiguring PUCCH resource having one or a plurality of spatial relations for UCI transmission; and
- activating/deactivating one or a plurality of spatial relations for PUCCH resource.

In the first embodiment, with respect to a dynamically specified PUCCH resource (for example, a PUCCH resource for HARQ-ACK feedback), switching between MTRP repetition and repetition without MTRP may be performed with use of at least one of the following:
- dynamically (for example, by using DCI) indicating PUCCH resource having one or a plurality of spatial relations.

According to the first embodiment described above, the UE can appropriately determine, based on a higher layer signaling, whether to use PUCCH repetitions to which different spatial relations are applied or PUCCH repetitions to which the same spatial relation is applied.

### <Second Embodiment>

A second embodiment relates to MTRP repetition.

The MTRP repetition may be explicitly configured for a UE by higher layer signaling, as distinguished from conventional repetition (repetition in Rel. 15/16). For example, the MTRP repetition may be explicitly configured for the UE by an RRC parameter (for example, an information element) associated with a PUCCH resource.

The second embodiment is broadly classified into a case (embodiment 2.1) where the number of MTRP repetitions is indicated by a new parameter (for example, an RRC parameter "nrofMTRPrep") and a case (embodiment 2.2) where the number of MTRP repetitions is indicated by an RRC parameter defined in existing NR (for example, an RRC parameter "nrofslot").

### [Embodiment 2.1]

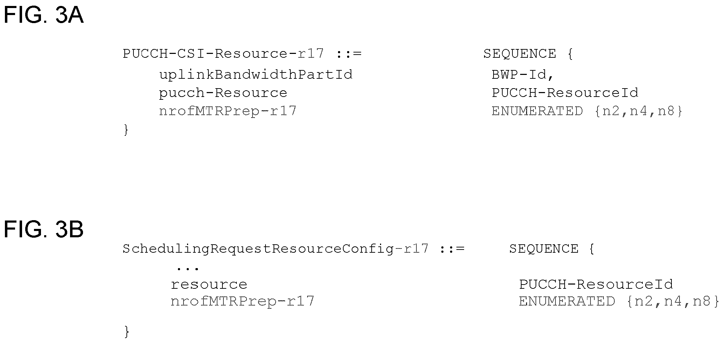

FIGS. 3A and 3B are each a diagram to show an example of the RRC parameter for MTRP repetition in embodiment 2.1.

FIG. 3A shows an example in which a parameter "nrofMTRPrep-r17" indicating the number of MTRP repetitions is included in an information element "PUCCH-CSI-Resource-r17" indicating a PUCCH resource used for a CSI report.

FIG. 3B shows an example in which the parameter "nrofMTRPrep-r17" indicating the number of MTRP repetitions is included in an information element "SchedulingRequestResourceConfig-r17" indicating a PUCCH resource used for transmission of a scheduling request.

As shown in FIGS. 3A and 3B, nrofMTRPrep-r17 may be configured in association with a PUCCH resource ID for a semi-statically configured PUCCH resource.

Note that the number of MTRP repetitions with respect to a PUCCH resource dynamically specified/activated by using DCI/MAC CE (for example, a PUCCH resource for HARQ-ACK feedback) may be specified for the UE by a field included in the DCI/MAC CE.

A UE operation related to the number of MTRP repetitions of embodiment 2.1 may be the same as a UE operation of embodiment 1.1.

### [Embodiment 2.2]

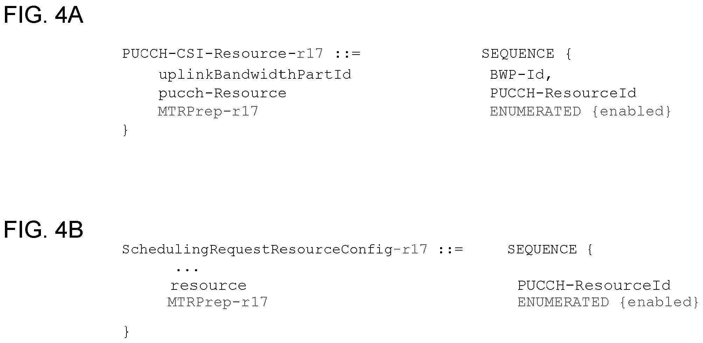

FIGS. 4A and 4B are each a diagram to show an example of the RRC parameter for MTRP repetition in embodiment 2.2. FIGS. 4A and 4B are similar to FIGS. 3A and 3B, respectively, but are different in that MTRPrep-r17 indicating that MTRP repetition is applied or not (or enabled/disabled) is included in place of nrofMTRPrep-r17 indicating the number of MTRP repetitions. MTRPrep-r17 may be the same parameter as that described in embodiment 1.2.

As shown in FIGS. 4A and 4B, MTRPrep-r17 may be configured in association with a PUCCH resource ID for a semi-statically configured PUCCH resource.

Note that with respect to a PUCCH resource dynamically indicated/activated by using DCI/MAC CE (for example, a PUCCH resource for HARQ-ACK feedback) whether MTRP repetition is applied may be specified for the UE by a field included in the DCI/MAC CE.

A UE operation related to whether MTRP repetition of embodiment 2.2 is applied or not may be the same as a UE operation of embodiment 1.2.

### [Switching Between MTRP Repetition and Repetition Without MTRP]

In the second embodiment, with respect to a semi-statically configured PUCCH resource (for example, a PUCCH resource for a periodic/semi-persistent CSI report), switching between MTRP repetition and repetition without MTRP may be performed with use of at least one of the following:
- reconfiguring nrofMTRPrep-r17 or MTRPrep-r17 for PUCCH resource;
- reconfiguring PUCCH resource having one or a plurality of spatial relations for UCI transmission; and
- activating/deactivating one or a plurality of spatial relations for PUCCH resource.

In the second embodiment, with respect to a dynamically specified PUCCH resource (for example, a PUCCH resource for HARQ-ACK feedback), switching between MTRP repetition and repetition without MTRP may be performed with use of at least one of the following:
- dynamically (for example, by using DCI) indicating PUCCH resource having one or a plurality of spatial relations; and
- indicating MTRP repetition or repetition without MTRP by using DCI.

According to the second embodiment described above, the UE can appropriately determine, based on a higher layer signaling, whether to use PUCCH repetitions to which different spatial relations are applied or PUCCH repetitions to which the same spatial relation is applied.

### <Third Embodiment>

A third embodiment relates to control of repetitions in a case where there is no explicit configuration of MTRP repetition.

In the third embodiment, the number of MTRP repetitions and whether MTRP repetition is applied or not are not explicitly configured for a UE. The number of PUCCH repetitions is configured for the UE by an RRC parameter defined in existing NR (for example, an RRC parameter "nrofslot").

In a case where the RRC parameter "nrofslot" is configured and where the number of repetitions indicated by the parameter is greater than 1, and a plurality of spatial relations are configured/activated/indicated for a PUCCH resource used for transmission, the UE may repetitively transmit the PUCCH across a plurality of slots by applying the plurality of spatial relations.

In a case where the RRC parameter "nrofslot" is configured and where the number of repetitions indicated by the parameter is greater than 1, and only one spatial relation is configured/activated/indicated for the PUCCH resource used for transmission, the UE may repetitively transmit the PUCCH across a plurality of slots by applying the same spatial relation (the above-described one spatial relation).

### [Switching Between MTRP Repetition and Repetition Without MTRP]

In the third embodiment, with respect to a semi-statically configured PUCCH resource (for example, a PUCCH resource for a periodic/semi-persistent CSI report), switching between MTRP repetition and repetition without MTRP may be performed with use of at least one of the following:
- reconfiguring PUCCH resource having one or a plurality of spatial relations for UCI transmission; and
- activating/deactivating one or a plurality of spatial relations for PUCCH resource.

In the third embodiment, with respect to a dynamically specified PUCCH resource (for example, a PUCCH resource for HARQ-ACK feedback), switching between MTRP repetition and repetition without MTRP may be performed with use of at least one of the following:
- dynamically (for example, by using DCI) indicating PUCCH resource having one or a plurality of spatial relations.

According to the third embodiment described above, the UE can appropriately determine, based on a higher layer signaling, whether to use PUCCH repetition to which different spatial relations are applied or PUCCH repetition to which the same spatial relation is applied.

### <Fourth Embodiment>

A fourth embodiment relates to a spatial relation used for PUCCH transmission in a case where MTRP repetition is not configured. A spatial relation used for PUCCH transmission in a case where the MTRP repetition is configured is as mentioned in the first to third embodiments. Note that "the MTRP repetition is configured/not configured" and "at least one of the number of MTRP repetitions and whether the repetition is applied or not is configured/not configured" may be interchangeably interpreted.

The UE may not expect a case where MTRP repetition is not configured/indicated for the UE and where a plurality of spatial relations are activated (or available) (may treat the case as an error case). In other words, when the MTRP repetition is not configured/indicated, the UE may assume that only one spatial relation is activated for PUCCH transmission.

In a case where the MTRP repetition is not configured/indicated and where a plurality of spatial relations are activated (or available), the UE may transmit the PUCCH by applying a specific spatial relation out of the plurality of spatial relations. This configuration is preferable for a case where the spatial relations are activated in units of PUCCH groups. This is because whether the MTRP repetition is supported for respective PUCCH resources in the group can be configured/indicated.

In a case where the MTRP repetition is not configured/indicated for the UE and where the plurality of spatial relations are activated, and an RRC parameter "nrofslot" is configured, the UE may perform repetition in Rel. 15/16 (for example, repetitive PUCCH transmission with multiple slots) by applying the above-described specific spatial relation.

In a case where the MTRP repetition is not configured/indicated and where the plurality of spatial relations are activated, and the RRC parameter "nrofslot" is not configured, the UE may perform PUCCH transmission without repetition by applying the above-described specific spatial relation.

The above-described specific spatial relation may correspond to, for example, at least one of the following:
- first spatial relation;
- last spatial relation; and
- spatial relation with spatial relation-related ID (for example, SRI ID) corresponding to specific value (minimum value, maximum value).

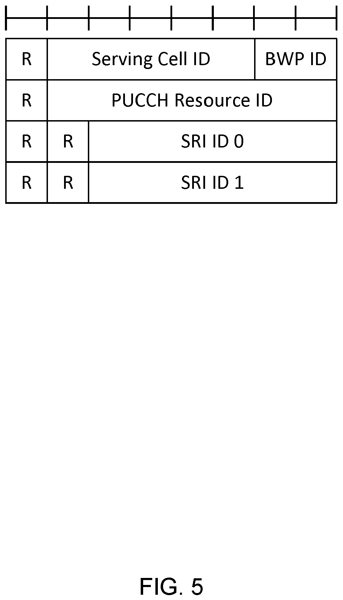

FIG. 5 is a diagram to show an example of a MAC CE for activation of a plurality of PUCCH spatial relations according to the fourth embodiment. FIG. 5 shows a bit sequence to constitute the MAC CE, and is expressed by a total of 4 octets (8 bits × 4 = 32 bits).

The MAC CE may include information about a serving cell ID ("Serving Cell ID" field), a BWP ID ("BWP ID" field), a PUCCH resource ID ("PUCCH Resource ID" field), and the like as application targets.

The MAC CE includes a field with SRI ID #i (in the present example, i = 0 to 1) indicating an SRI ID as an activation target. The UE activates SRI indicated by the SRI ID #i field.

A field with "R" shown in FIG. 5 may mean a reserved bit for future enhancement. Note that one or more "R" fields may be used as a new field related to whether this MAC CE indicates a plurality of pieces of spatial relation information (SRI) or a new field related to how many SRI ID fields are included in this MAC CE.

For example, a case where the new field with 1 bit indicates "0" may mean that one SRI ID field (for example, only SRI ID #0 field) included in this MAC CE is present, and a case where the new field with 1 bit indicates "1" may mean that a plurality of SRI ID fields (for example, SRI ID #0 field and SRI ID #1 field) included in this MAC CE are present.

When two spatial relations (spatial relations indicated by SRI ID #0 field, SRI ID #1 field, and SRI ID #2 field) are activated as the plurality of spatial relations by using the MAC CE of FIG. 5, the UE may perform repetitive PUCCH transmission (or PUCCH transmission) by applying a spatial relation indicated by SRI ID #0 field or a spatial relation indicated by SRI ID #1 field as the above-described specific spatial relation.

According to the fourth embodiment described above, when a plurality of spatial relations are available, the UE can appropriately determine a spatial relation applied to PUCCH transmission.

### <Fifth Embodiment>

A fifth embodiment relates to a spatial relation used for PUCCH transmission in a case where the number of MTRP repetitions and the number of activated spatial relations for the PUCCH transmission are different from each other. Note that when these numbers are the same, it is only necessary that the UE maps spatial relations in one-to-one correspondence for each repetition.

In a case where MTRP repetition is configured/indicated for the UE and where the number of MTRP repetitions (here, let this number be M) is less than the number of active spatial relations, the UE may perform M repetitive PUCCH transmissions by applying M specific spatial relations among these spatial relations.

The above-described M specific spatial relations may correspond to, for example, at least one of the following:
- first M spatial relations;
- last M spatial relations; and
- M spatial relations satisfying specific condition.

The M spatial relations satisfying the specific condition may be, for example, spatial relations corresponding to the first M of the spatial relations in ascending order (or descending order) of a spatial relation-related ID (for example, an SRI ID).

Note that the i-th (i = 1, 2, ...) spatial relation among the M specific spatial relations may be used for the i-th transmission occasion.

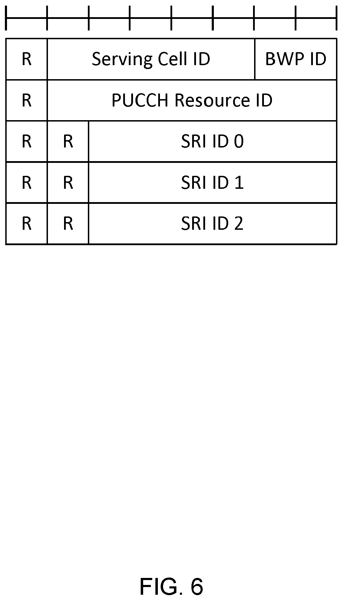

FIG. 6 is a diagram to show an example of a MAC CE for activation of a plurality of PUCCH spatial relations according to the fifth embodiment. FIG. 6 is similar to the MAC CE of FIG. 5, but is different in that three SRI ID #i fields (i = 0 to 2) are included.

Also in FIG. 6, one or more "R" fields may be used as a new field related to whether this MAC CE indicates a plurality of pieces of spatial relation information (SRI) or a new field related to how many SRI ID fields are included in this MAC CE.

Here, consider a case where M = 2 is configured/indicated for the UE, and three spatial relations (spatial relations indicated by SRI ID #0 field, SRI ID #1 field, and SRI ID #2 field) are activated as the plurality of spatial relations with use of the MAC CE of FIG. 6. In this case, the UE may perform transmission by applying, to M (= 2) respective PUCCH repetitions, M (= 2) spatial relations of a spatial relation indicated by SRI ID #0 field and spatial relation indicated by SRI ID #1 field as the above-described spatial relations, or may perform transmission by applying, to M (= 2) respective PUCCH repetitions, M (= 2) spatial relations of a spatial relation indicated by SRI ID #1 field and spatial relation indicated by SRI ID #2 field as the above-described spatial relations.

In a case where MTRP repetition is configured/indicated for the UE and where the number of MTRP repetitions (here, let this number be M) is greater than the number of active spatial relations (here, let this number be N), the mod(floor ((i - 1)/X), N) + 1 th spatial relation may be used for the i-th (i = 1, 2, ...) transmission occasion (repetition). Note that mod(A, B) means a remainder in dividing A by B, and floor (C) denotes a floor function of C.

Here, the X may be referred to as a parameter for mapping of spatial relations. A value of the X may be configured with use of a higher layer parameter. The UE may judge the value of the X based on a mapping pattern. For example, the UE may judge that X = 1, X = 2, and X = 4 in mapping pattern 1, mapping pattern 2, and mapping pattern 3, respectively.

The value of the X corresponding to the mapping pattern may be pre-defined by specifications, or may be configured for the UE by higher layer signaling. The mapping pattern, a mapping-related identifier, mapping-related information, and the like may be interchangeably interpreted.

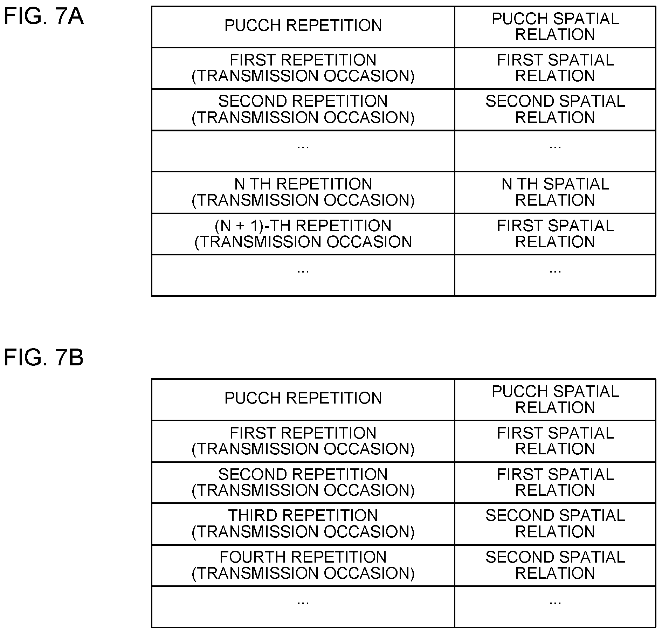

FIGS. 7A and 7B are each a diagram to show an example of correspondence between repetitive transmission occasions and spatial relations according to the fifth embodiment. FIG. 7A and FIG. 7B correspond to a case where X = 1 and a case where X = 2, respectively. As shown in the present example, when M is greater than N * X, the same mapping pattern may be used for the remaining transmission occasions (greater than N * X).

According to the fifth embodiment described above, when a plurality of spatial relations are available, the UE can appropriately determine a spatial relation applied to PUCCH transmission.

### <Others>

At least one of the above-mentioned embodiments may be employed only in a UE that has reported a specific UE capability or that supports the specific UE capability.

The specific UE capability may indicate at least one of the following:
- whether to support different spatial relations for respective PUCCH transmission occasions;
- maximum number of active spatial relations for PUCCH repetition;
- maximum number of active spatial relations for PUCCH repetition to convey/transmit same UCI;
- maximum number of PUCCH resource groups;
- maximum number of beam switches for 1 change (or 1 transmission) of PUCCH to convey/transmit same UCI;
- maximum number of spatial relations configured for PUCCH repetition; and
- maximum number of PUCCH slots/sub-slots/frames/sub-frames for PUCCH repetition.

At least one of the above-mentioned embodiments may be employed in a case where specific information related to the above-mentioned embodiments is configured for the UE by higher layer signaling. For example, the specific information may be information indicating enabling of different spatial relations for PUCCH transmission occasions, an arbitrary RRC parameter for a specific release (for example, Rel. 17), or the like.

A plurality of spatial relations (SRI) in the present disclosure, an SRI sequence, an SRI set, an SRI pattern, SRI applied to PUCCH repetition, and the like may be interchangeably interpreted. The plurality of pieces of SRI may be configured/activated/indicated for the UE with use of an SRI sequence including one or a plurality of pieces of SRI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

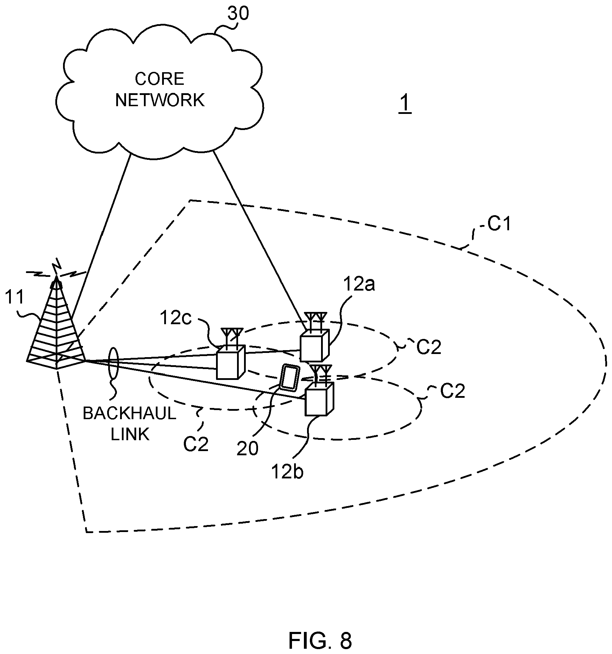

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor", and the base station 12 corresponding to a relay station (relay) may be referred to as an "IAB node".

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment", "DL DCI", and so on, and DCI for scheduling the PUSCH may be referred to as "UL grant", "UL DCI", and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set". Note that a "search space", a "search space set", a "search space configuration", a "search space set configuration", a "CORESET", a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link". In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block", an "SS Block (SSB)", and so on. Note that an SS, an SSB, and so on may be also referred to as a "reference signal".

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)".

### (Base Station)

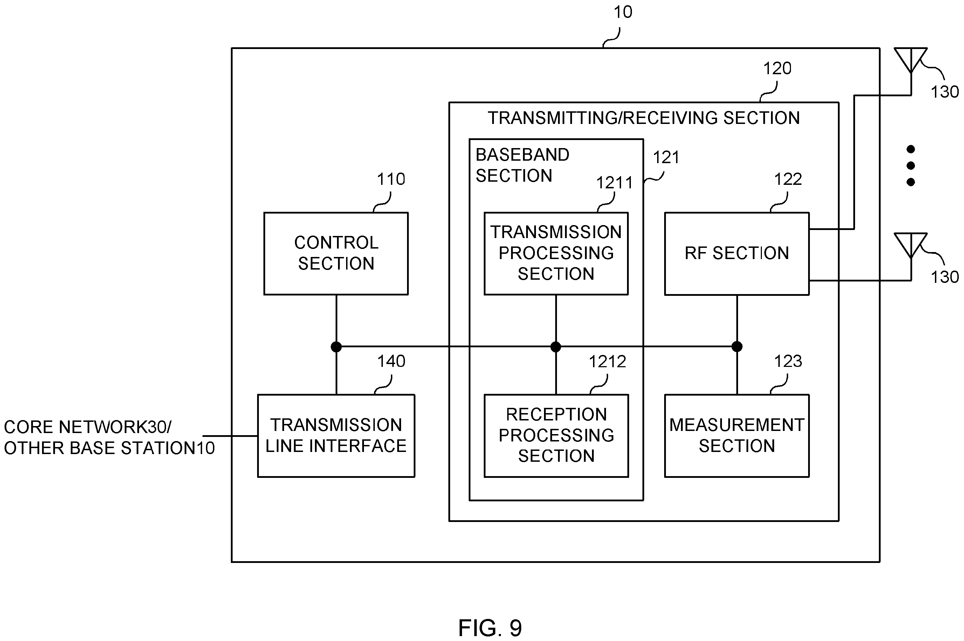

FIG. 9 is a diagram to show an example of a structure of the base station according to one embodiment. The base station 10 includes a control section 110, a transmitting/receiving section 120, transmitting/receiving antennas 130 and a transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit a higher layer signaling for causing the user terminal 20 to determine whether to apply different spatial relations or the same spatial relation for repetitive transmissions of a Physical Uplink Control Channel (PUCCH).

The control section 110 may assume that the user terminal 20 performs the repetitive transmissions by using one or more determined spatial relations (may perform PUCCH reception processing under the assumption).

### (User Terminal)

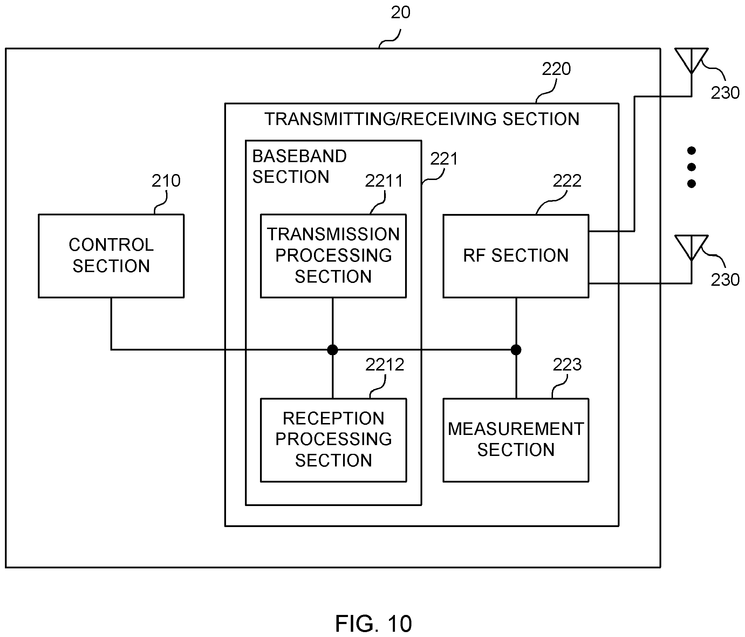

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may determine, based on a higher layer signaling, whether to apply different spatial relations or the same spatial relation (MTRP repetition or Rel-15/16 repetition is performed)) for repetitive transmissions of a Physical Uplink Control Channel (PUCCH). The higher layer signaling may be the RRC parameter, the MAC CE, and the like mentioned in the above-mentioned embodiments, and may be, for example, at least one of nrofMTRPrep-r17, MTRPrep-r17, nrofslot, and the like.

The transmitting/receiving section 220 may perform the repetitive transmissions using one or more determined spatial relations.

When a higher layer parameter (for example, nrofMTRPrep-r17) indicating the number of repetitions to which different spatial relations are applied is configured, the control section 210 may determine to apply different spatial relations to the repetitive transmissions.

When a higher layer parameter (for example, MTRPrep -r17) indicating repetition to which different spatial relations are applied being enabled and a higher layer parameter (for example, nrofslot) indicating the number of slot repetitions with a value greater than 1 are configured, the control section 210 may determine to apply different spatial relations to the repetitive transmissions.

In a case where repetitions to which different spatial relations are applied are not configured and where a plurality of spatial relations are activated, the control section 210 may determine to apply, to the repetitive transmissions, a specific spatial relation out of the plurality of spatial relations.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

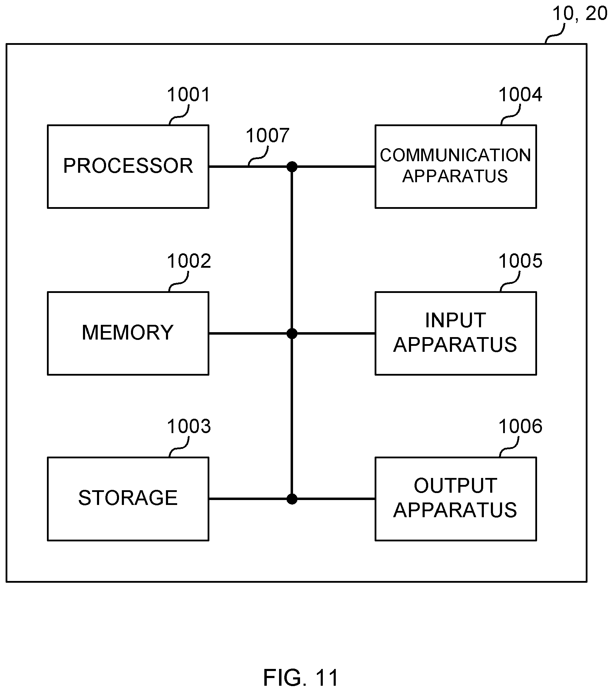

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel", a "symbol", and a "signal" (or signaling) may be interchangeably interpreted. Also, "signals" may be "messages". A reference signal may be abbreviated as an "RS", and may be referred to as a "pilot", a "pilot signal", and so on, depending on which standard applies. Furthermore, a "component carrier (CC)" may be referred to as a "cell", a "frequency carrier", a "carrier frequency" and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI", a plurality of consecutive subframes may be referred to as a "TTI", or one slot or one mini-slot may be referred to as a "TTI". That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot", a "mini-slot", and so on instead of a "subframe".

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)",a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given channel/signal outside active BWPs. Note that a "cell", a "carrier", and so on in the present disclosure may be interpreted as a "BWP" .

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on can be used interchangeably.

In the present disclosure, the terms such as a "base station (BS)", a "radio base station", a "fixed station", a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus", and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of "), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming", "expecting", "considering", and the like.

The terms "connected" and "coupled", or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some nonlimiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". Note that the phrase may mean that "A and B is each different from C". The terms "separate", "be coupled", and so on may be interpreted similarly to "different".

When terms such as "include", "including", and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a", "an", and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that determines, based on a higher layer signaling, whether to apply different spatial relations or the same spatial relation for repetitive transmissions of a Physical Uplink Control Channel (PUCCH); and
a transmitting section that performs the repetitive transmissions using one or more determined spatial relations.

2. The terminal according to claim 1, wherein
when a higher layer parameter indicating the number of repetitions to which different spatial relations are applied is configured, the control section determines to apply different spatial relations to the repetitive transmissions.

3. The terminal according to claim 1 or 2, wherein
when a higher layer parameter indicating that repetitions to which different spatial relations are applied is enabled and a higher layer parameter indicating the number of slot repetitions with a value greater than 1 are configured, the control section determines to apply different spatial relations to the repetitive transmissions.

4. The terminal according to any one of claims 1 to 3, wherein
in a case where repetitions to which different spatial relations are applied is not configured and where a plurality of spatial relations are activated, the control section determines to apply, to the repetitive transmissions, a specific spatial relation out of the plurality of spatial relations.

5. A radio communication method for a terminal, the radio communication method comprising:
determining, based on a higher layer signaling, whether to apply different spatial relations or the same spatial relation for repetitive transmissions of a Physical Uplink Control Channel (PUCCH); and
performing the repetitive transmissions using one or more determined spatial relations.

6. A base station comprising:
a transmitting section that transmits a higher layer signaling for causing a terminal to determine whether to apply different spatial relations or the same spatial relation for repetitive transmissions of a Physical Uplink Control Channel (PUCCH); and
a control section that assumes that the terminal performs the repetitive transmission using one or more determined spatial relations.
